# EUROPEAN PATENT SPECIFICATION

(11) **EP 2 194 408 B1**
(45) Date of publication and mention of the grant of the patent: **10.09.2014**
(21) Application number: 09015061.6
(22) Date of filing: 04.12.2009
(51) Int. Cl.: G02B 6/02, H01S 3/067

(54) **lonizing radiation-resistant optical fibre amplifier**
Ionisierung eines strahlungsbeständigen Glasfaserverstärkers
Amplificateur de fibre optique résistant aux radiations par ionisation

(30) Priority: 08.12.2008 FR 0806864; 08.12.2008 US 120682 P
(43) Date of publication of application: 09.06.2010
(73) Proprietor: Draka Comteq B.V., 1083 HJ Amsterdam (NL)
(72) Inventor: Regnier, Elise, 91570 Bièvres (FR); Pastouret, Alain, 91300 Massy (FR); Burov, Ekaterina, 92100 Boulogne-Billancourt (FR)
(74) Representative: Algemeen Octrooi- en Merkenbureau B.V.

(56) References cited:
- EP-A- 1 764 350
- WO-A-2007/020362
- TAMMELA S ET AL: "Direct nanoparticle deposition process for manufacturing very short high gain Er-doped silica glass fibers" ECOC 2002. 28TH EUROPEAN CONFERENCE ON OPTICAL COMMUNICATION (IEEE CAT. NO. 02TH8640) IEEE PISCATAWAY, NJ, USA, vol. 4, 2002, page 2 pp. vol. 4, XP002544461 ISBN: 87-90974-66-2

## Description

The present invention relates to the field of optical fibres and more specifically an amplifying optical fibre suitable for amplifying the transmitted optical signals. The amplifying fibres can be used in particular as high speed transmission line amplifiers or in lasers. The present invention relates to the use of such a amplifying fibre in an environment with ionizing radiation. The invention also relates to a method for producing such a fibre.

In standard fashion, an optical fibre is composed of an optical core the function of which is to transmit and optionally amplify an optical signal, and an optical cladding the function of which is to confine the optical signal within the core. To this end, the refractive indices of the core n_{c} and the cladding n_{g} are such that n_{c}>n_{g}.

Fibre amplifiers and in particular fibres doped with rare earth elements are commonly used for optical applications.

For example, erbium doping is used in optical telecommunication systems for amplifying transmitted optical signals. Such fibres are used in EDFAs or "Erbium Doped Fibre Amplifiers" and have a central core composed of a silica matrix comprising doping elements such as erbium at concentrations of the order of 250 to 1000 wtppm (0.025 to 0.1 wt%) optionally combined with complementary doping elements making it possible to improve amplification, such as for example alumina for broadening the gain bandwidth for WDM (Wavelength Dense Multiplexing) applications.

Ytterbium doping is often used in fibres for lasers, such as for example 1 µm lasers for military applications. Ytterbium can also be used in the EDFA fibres to improve the effectiveness of absorption of the pump signal by the erbium. Similarly, other rare earth elements can be used alone or in combination depending on the sought applications.

In a manner known *per se*, optical amplification in a rare earth doped fibre operates by injecting into the fibre a pump signal which excites the rare earth ions (for example the Er³⁺ ions in the EDFAs). When a light signal passes through this portion of optical fibre, it de-energizes the ions by stimulated emission by producing a photon identical in all respects to the incident photon. The light signal has therefore been doubled. Other rare earth elements can be used as doping elements for amplification of the signal, such as ytterbium (Yb) or thulium (Tm), as a replacement for or in combination with erbium. A portion of such a fibre in combination with a resonating cavity constituted by a system of mirrors or Bragg gratings, forms a laser fibre of which wavelength and power depend on the rare earth element used and its concentration.

The amplifying optical fibres are produced by incorporating rare earth ions in the silica matrix of the fibre core. The incorporation of the rare earth ions in the fibre core is generally accompanied by other dopants for improving the amplification gain and/or widening the amplification band and/or limiting inhomogeneities in the dispersion of the rare earth dopants in the core matrix. Typically, the incorporation of rare earth dopants is accompanied by alumina (Al₂O₃) and/or phosphorus (P). Moreover, an amplifying fibre can also contain germanium (Ge) in the core in order to provide the step index necessary for guiding and confining the transmitted signal.

In a manner known *per se*, the signal transmitted in a fibre undergoes optical losses which accumulate with the distance travelled. These transmission losses increase substantially when the fibre is subjected to ionizing radiation such as beta, alpha, gamma rays and X-rays. The fibre can be subjected to such radiation when it is used in an optical system the environment of which contains ionizing radiation, such as for example a nuclear power plant, a particle acceleration laboratory or a satellite sent into space. In such an environment, the radiation can reach levels greater than or equal to 100 Gray, i.e. 10,000 rad for a space environment, or even of the order of a MGray (10⁸ Rad) in the case of nuclear power plants.

Even if radiation-resistant optical fibres are used in radioactive environments to ensure the transmission of data, the amplification functions are generally ensured by electronic systems.

Now, the use of all-optical systems in these radioactive environments is sought.

Passive fibres exist (not doped with rare earth) specifically designed to be used in such environments. For example, US-A-4 690 504 discloses such a fibre without germanium (Ge) in the core. The absence of germanium in the core makes it possible to obtain an improved resistance to ionizing radiation. The optical cladding is then doped with a dopant having the effect of reducing the refractive index of the silica, such as fluorine. This document also discloses an embodiment with a fibre the core of which is lightly doped with fluorine to compensate for a surplus of oxygen in the core.

US-A-5 509 101 discloses an optical fibre resistant to X-rays and gamma rays in particular. This fibre has a core and a cladding doped with fluorine. This document describes several embodiments with different concentrations of fluorine and germanium. This document indicates that the transmission losses are reduced when the fibre also contains germanium in the core.

Tammela et al. ("direct nanoparticle deposition process for manufacturing very short high gain Er-doped silica glass fibers" ECOC 2002; 28th European Conference on optical communication; IEEE Piscataway, NJ, U.S.A., Vol. 4, 2002, page 2) discloses a vapor-based process in which glass forming elements and dopants are all reacted together in a torch to manufacture highly Er-doped fibers to be used in compact amplifiers.

WO-A-2005 109055 discloses an optical fibre with a pure silica core and a cladding doped with fluorine. This document indicates that a high ratio, of between 9 and 10, between the diameters of the optical cladding and the core improves the resistance of the fibre to ionizing radiation.

It has been established that fibres with a pure silica core or a core doped with fluorine exhibit smaller losses in a radioactive environment compared to fibres having a silica core doped with germanium or fibres containing phosphorus in the core or in the cladding. Nevertheless, in the particular case of amplifying fibres, the necessary presence of rare earth dopants in the core, as well as of dopants for improving the gain, leads to significant losses when the fibre is subjected to ionizing radiation.

Now, it has been established that the presence of alumina or phosphorus leads to a clear increase in optical losses when the fibre is subjected to ionizing radiation.

The publication of H. Henschel et al., "Radiation-Induced loss of Rare Earth doped silica fibres", IEEE 1998, pp 439-444, clearly identifies this problem of the increase in the losses of amplifying fibres in a radioactive environment. This publication proposes limiting the concentrations of dopants but without actually specifying a manufacturing method for arriving at a radiation-resistant amplifying optical fibre.

US-A-2003/175003 describes a method for producing an amplifying optical fibre in which the rare earth elements are introduced into the fibre core by incorporation of nanoparticles the matrix of which has a composition different from that of the core. The nanoparticles have an alumina (Al₂O₃) or antimony (Sb₂O₃) matrix doped with erbium. However, the composition of such nanoparticles is not specifically designed to resist radiation.

WO 2007/020362 A2 describes a method for producing an amplifying optical fibre in which the rare earth elements are introduced into the fibre core by impregnation of nanoparticles into the porous internal layer of a silica tube in order to form the core of a primary preform. The nanoparticles have an antimony or bismuth matrix doped with erbium.

A need therefore exists for an amplifying or laser fibre which can be used in an environment with strong ionizing radiation with limited optical losses.

To this end, the invention proposes an optical fibre comprising rare earth dopants in the core without the addition of any other dopant which is sensitive to radiation. In pa rticular, the fibre core contains neither alumina nor phosphorus. The absence of such dopants also makes it possible to minimize the level of background losses before irradiation. By "background losses" is meant the optical losses of the fibre measured outside the absorption bands of the rare earth ions and before any implementation in a radioactive environment. Such an optical fibre can be obtained by incorporating rare-earth-doped pure silica nanoparticles in the fibre core.

The invention thus relates to an optical fibre comprising a central core suitable for transmitting and amplifying an optical signal, and an optical cladding surrounding the central core and suitable for confining the transmitted optical signal within the core, the fibre core having a matrix and containing rare-earth-doped nanoparticles, each nanoparticle having a silica-based matrix containing at least 85% by weight (85 wt%) silica. Preferably, the matrix of each nanoparticle contains at least 95% by weight (95 wt%) silica.

According to the embodiments, the fibre according to the invention can comprise one or more of the following characteristics:
- the core matrix is a silica-based matrix containing no phosphorus;
- the core matrix is a silica-based matrix containing no alumina;
- the core matrix is a pure silica matrix;
- the core matrix is a fluorine-doped silica-based matrix;
- the core matrix is a nitrogen-doped silica-based matrix;
- the core matrix is a germanium-doped silica-based matrix;
- the matrix of each nanoparticle is a pure silica matrix;
- the matrix of each nanoparticle contains alumina in a concentration such that the concentration of alumina in the core is less than 3% by weight;
- the rare earth dopants are chosen from erbium, ytterbium, thulium or a combination thereof;
- the amplifying or laser optical fibre has a gain width comprised between 1 nm and 40 nm, preferably between 1 nm and 30 nm;
- the amplifying or laser optical fibre has optical losses less than or equal to 1.5 dB/km at 1200 nm, outside the absorption band of erbium before any irradiation;
- the amplifying or laser optical fibre has a loss increment of less than 0.05 dB/m at 1550 nm under irradiation of 300 Gy at 0.08 Gy/min (8 Rad/min) at ambient temperature.

The invention also relates to an optical amplifier comprising a portion of fibre according to the invention, doped with erbium, in which the length of fibre necessary for amplification with a gain of 25 dB at 1550 nm is less than 10 m.

The invention also relates to a laser comprising a portion of fibre according to the invention.

The invention also relates to a method for the production of a primary preform of optical fibre comprising a central core suitable for transmitting and amplifying an optical signal, and an optical cladding surrounding the central core and suitable for confining the transmitted optical signal within the core, the method comprising the steps of:
- synthesizing rare-earth-doped silica-based nanoparticles, each nanoparticle containing at least 85% by weight silica, preferably at least 95%;
- dispersing the nanoparticles in an aqueous solution;
- impregnating an internal porous layer of a silica tube with said solution in order to form the core of a primary preform.

According to an embodiment, the step of synthesizing the nanoparticles comprises a step consisting of co-precipitating the precursors of the rare earth salts and silica salts in an aqueous solution, with a molar ratio of silica salt precursors to rare earth salt precursors comprised between 30 and 300.

Other characteristics and advantages of the invention will become apparent on reading the following description. This description is given with reference to embodiments of the invention that are given by way of examples. The description is given with reference to the attached drawings, which show:
- Figure 1, a graphical representation of the set profile of a fibre according to a first embodiment of the invention;
- Figure 2, a graphical representation of the set profile of a fibre according to a second embodiment of the invention;
- Figure 3, a diagram of a method of production of an amplifying optical fibre according to the invention.

The optical fibre according to the invention comprises a central core suitable for transmitting and amplifying an optical signal, an optical cladding surrounding the central core and suitable for confining the transmitted optical signal within the core, and an outer cladding, generally constituted by silica. Typically, the central core and the optical cladding are obtained by gas phase deposition (CVD, OVD, VAD, etc). In the case of a CVD type method, the outer cladding is constituted by the deposition tube and optionally by refilling or sleeving. In general, the less volatile elements (rare earths, alumina, etc) are incor porated by impregnation of a porous silica rod during a CVD operation in order to form the core of the primary preform.

The fibre core according to the invention is constituted by a silica-type matrix and by nanoparticles doped with rare earth elements. The core and nanoparticle matrices are especially designed to minimize or even eliminate the presence of dopants sensitive to radiation. For example, the incorporation of the rare earth ions into pure silica nanoparticles makes it possible to introduce the rare earth ions into the core without incorporating other dopants sensitive to ionizing radiation. It is thus possible to obtain an active (amplifying or laser) fibre containi ng no traces of phosphorus (P) or alumina (Al₂O₃). The nanoparticles can however contain elements other than the rare earth dopants. For example, the silica matrix of the nanoparticles can contain a little alumina which limits the formation of packets of Er³⁺ ions. The concentration of alumina in the core is however very limited compared with known fibres.

The fibre core can be a pure silica matrix containing these rare-earth-doped pure silica nanoparticles. The fibre is then particularly resistant to ionizing radiation. The fibre core can however comprise other dopants, which are not, or only slightly, sensitive to ionizing radiation, such as fluorine and/or nitrogen. The fibre core can even contain germanium to the extent that the amplifying fibres are used only over relatively short lengths.

If the fibre core is made of pure silica or doped with fluorine, the optical cladding will then necessarily be a buried cladding (i.e. with an index less than that of the outer cladding) in order to ensure the function of guiding the optical signal in the fibre core. The optical cladding can thus be doped with fluorine or have microperforations.

In order to optimize the optogeometrical parameters of the fibre, such as the cut-off wavelength or the mode diameter, the fibre core can be doped with germanium. If the fibre core is made of silica doped with germanium or nitrogen, the optical cladding can then be made of pure silica or lightly doped with fluorine and/or with germanium. Optimization of the optogeometrical parameters allows in particular for improved compatibility with other optical fibres of standard ized systems, even if the resistance to ionizing radiation is lower in the case of a core containing germanium.

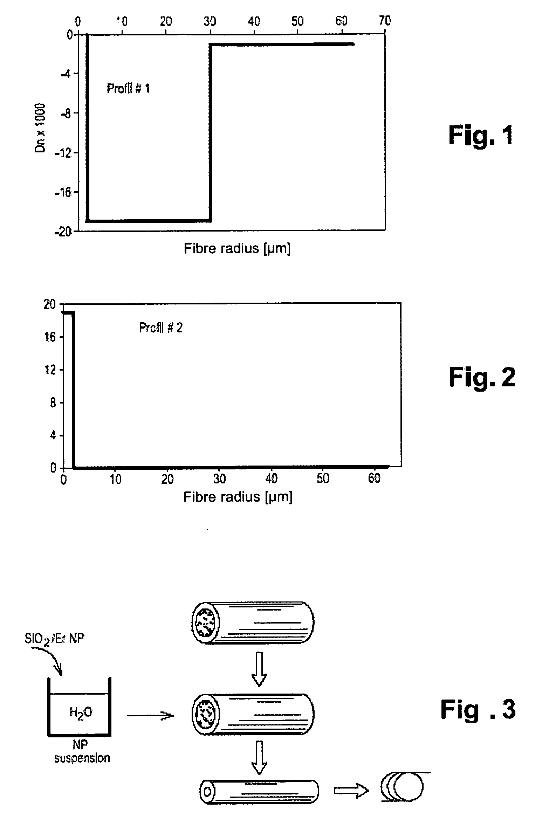

Figures 1 and 2 illustrate two possible index profiles for the amplifying fibre according to the invention. These profiles are set profiles. The profiles of the examples of Figures 1 and 2 are very different. In fact, the invention is not limited to a particular fibre profile.

For optical fibres, the index profile is generally classified according to the appearance of the graph representing the refractive index as a function of the radius of the fibre. In standard fashion, the distance r to the centre of the fibre is shown on the x-axis, and on the y-axis, the difference in refractive index between the refractive index of the core and the cladding compared with the refractive index of the outer cladding (generally made of pure silica).

Figure 1 illustrates a first example of an index profile for an amplifying fibre according to the invention.

In the example of Figure 1, the fibre core is made of pure silica. The optical cladding of the fibre is then a buried cladding, for example made of silica doped with fluorine, having an index difference of -19.10⁻³ with the core. The outer cladding is made of silica lightly doped with fluorine having an index difference of -1.10⁻³ with pure silica. The fibre core diameter is 4 µm and the ratio of the optical cladding diameter to the core diameter is approximately 15. Such a profile makes it possible to ensure satisfactory confinement of the signal within the core and, the absence of any dopant in the core apart from rare earth dopants, makes it possible to limit the optical loss increment in a radioactive environment.

Figure 2 illustrates a second example of an index profile for an amplifying fibre according to the invention.

In the example of Figure 2, the fibre core is made of silica doped with germanium; the core has an index difference of +19.10⁻³ with respect to the index of the optical cladding. The optical cladding is composed of silica codoped with germanium and fluorine and the outer cladding is made of pure silica. The fibre core diameter is 3.6 µm and the ratio of the diameter of the optical cladding to the core diameter depends on the index of the optical cladding: the more the latter is buried, the higher the ratio. In the case of an optical cladding index equal to the index of the outer cladding, this ratio can be considerably reduced, for example this ratio may be of the order of 3. Such a profile makes it possible to ensure satisfactory confinement of the signal within the core for a lower production cost. The presence of germanium in the core leads to an optical loss increment greater than that of the fibre of Figure 1 in a radioactive environment, but remains limited.

Figure 3 illustrates a possible embodiment for the production of an amplifying optical fibre according to the invention.

### 1) Synthesis of nanoparticles:

Nanoparticles of silica doped with erbium can be produced by chemical or physical synthesis and dispersed in an aqueous solution.

For example, it is possible to obtain these nanoparticles by chemical route as follows: a coprecipitation in aqueous medium and basic catalysis of precursors of silica salts and precursors of rare earth salt with a controlled pH are carried out. The molar ratio of precursors of silica salt and precursors of rare earth salt is comprised between 30 and 300, in order to obtain nanoparticles having a silica-based matrix containing at least 85% by weight (85 wt%) silica, and preferably at least 95% by weight (95 wt%) silica.

The size of the nanoparticles is controlled by the choice of the reaction parameters, such as in particular the quantity of catalyst, the concentration of the reagents, the reaction time, the ionic strength of the medium and the presence of surfactants. Nanoparticles of controlled size are then obtained, which are then washed and redispersed in water, at a defined concentration. It is possible to add aluminium precursors to the coprecipitation if it is desired to include alumina in the matrix of the nanoparticles. In any case, the matrix of the nanoparticles will contain at least 85% by weight silica and preferably at least 95%. Furthermore, the addition of the aluminium is limited so that the concentration of alumina in the fibre core is less than 3% by weight.

Any rare earth element allowing amplification by optical pumping over a given spectral window can be used according to the invention alone or in combination. Preferably, erbium, ytterbium, thulium, or a combination thereof will be used.

### 2) Integration of the nanoparticles in the core of the preform:

The solution of nanoparticles in stable suspension is then used to impregnate the porous core of a silica rod during an MCVD operation to form the doped core of the primary preform. This is followed by drying the preform, then its vitrification and its contraction.

### 3) Production of the guiding structure (according to the profile):

The optical cladding can be produced by an MCVD operation or by a PCVD operation, in particular when the optical cladding is highly doped with fluorine.

### 4) Production of the final preform:

The primary preform is also subjected to a refilling operation or sleeving in order to form a final preform. This preform can then be drawn on a fibre-drawing tower in order to obtain the optical fibre.

Such a production method makes it possible to obtain an amplifying optical fibre having a concentration of rare earth dopants sufficient to ensure satisfactory amplification over a determined spectral window, whilst having satisfactory resistance to radiation.

The concentration by weight of rare earth elements in the core can be comprised between 100 ppm and a few % by weight, depending on the element used and on the gain sought. The amplification spectral window depends on the rare earth elements used. For example, with a fibre containing approximately 300 ppm of erbium, some twenty metres will be sufficient to obtain an EDFA having a gain of 23dB at 1550 nm. By increasing the concentration of erbium in the fibre, it is possible to obtain an EDFA having a gain of 25 dB at 1550 nm with a fibre length of less than 10 m. The value of the gain in a fibre according to the invention will depend on the concentration and type of rare earth element used. The fibre according to the invention has a gain width comprised between 1 nm and 40 nm, preferably between 1 nm and 30 nm. The gain width depends among other things on the quantity of alumina introduced into the matrix of nanoparticles.

Generally, the rare-earth-doped fibres exhibit background losses (i.e. outside the absorption band of the rare earth ion), mainly determined by the losses of the core matrix. Thus, in the case of the fibre of the invention, these losses will remain limited both before and after irradiation. For example, for a silica matrix doped with germanium and containing nanoparticles doped with erbium, the fibre of the invention will exhibit losses of less than 2 dB/km at 1200 nm before irradiation (the wavelength of 1200 nm is that generally used to characterize the background losses of the erbium-doped fibres). In the case of a pure silica matrix, these losses are less than 1.5 dB/km at 1200 nm. The addition of dopants such as alumina would lead to an increase in these losses typically up to 6 dB/km for 6 wt% of Al. For the same sought properties (for example a certain gain width), it is preferable to add the alumina to the silica matrix of the nanoparticles rather than to the core matrix, as the addition of alumina to the nanoparticles will require a smaller alumina content, and as a result, will lead to smaller losses.

After irradiation carried out at ambient temperature, at a rate of 0.08 Gy/min (8Rad/min), for a total dose of 300 Gy (typical dose in a space environment over approximately 15 years, or in a nuclear power plant in the part distant from the reactor), the attenuation increment of the fibre according to the invention is less than 0.05 dB/m at 1550 nm. Under the same conditions, a standard erbium-doped fibre will have an attenuation increment of the order of 1 dB/m. More generally, the sensitivity of the fibre of the invention to irradiation is expected to be close to that of a fibre not doped with a rare earth element having the same core matrix.

The fibre according to the invention can be used in a compact optical amplifier situated in an environment with ionizing radiation, for example the Ethernet network of a particle physics laboratory, a nuclear power plant or a satellite exposed to cosmic radiation. Combined with a system of mirrors or Bragg gratings, the fibre of the invention can also be used as a laser fibre in the same environments as mentioned above.

## Claims

1. An optical fibre comprising a central core suitable for transmitting and amplifying an optical signal, and an optical cladding surrounding the central core and suitable for confining the transmitted optical signal within the core, the fibre core having a matrix and containing rare-earth-doped nanoparticles, **characterised in that** each nanoparticle has a silica-based matrix containing at least 85% by weight (85 wt%) silica.

2. The optical fibre according to claim 1, in which the matrix of each nanoparticle contains at least 95% by weight (95 wt%) silica.

3. The optical fibre according to claim 1 or 2, in which the core matrix is a silica-based matrix containing no phosphorus (P).

4. The optical fibre according to claim 1 or 2, in which the core matrix is a silica-based matrix containing no alumina (Al₂O₃).

5. The optical fibre according to any one of claims 1 to 4, in which the core matrix is a pure silica matrix.

6. The optical fibre according to any one of claims 1 to 4, in which the core matrix is a silica-based matrix doped with fluorine (F).

7. The optical fibre according to any one of claims 1 to 4, in which the core matrix is a silica-based matrix doped with nitrogen (N).

8. The optical fibre according to any one of claims 1 to 4, in which the core matrix is a silica-based matrix doped with germanium (Ge).

9. The optical fibre according to any one of claims 1 to 8, in which the matrix of each nanoparticle is a pure silica matrix.

10. The optical fibre according to any one of claims 1 to 8, in which the matrix of each nanoparticle contains alumina such that the concentration of alumina in the core is less than 3% by weight.

11. The optical fibre according to any one of the previous claims, having a gain width comprised between 1 nm and 40 nm, preferably between 1 nm and 30 nm.

12. The optical fibre of one of the previous claims, in which the rare earth dopant is chosen from erbium (Er), ytterbium (Yb), thulium (Tm) or a combination thereof.

13. The optical fibre according to claim 12 doped with erbium, having optical losses less than or equal to 1.5 dB/km at 1200 nm, outside the absorption band of the erbium and before any irradiation.

14. The optical fibre according to claim 13, having a loss increment of less than 0.05 dB/m at 1550 nm under irradiation of 300 Gy at 0.08 Gy/min (8 Rad/min) at ambient temperature.

15. Optical amplifier comprising a portion of fibre according to claim 13 or 14, in which the length of fibre necessary for amplification with a gain of 25 dB at 1550 nm is less than 10 m.

16. Laser comprising at least one portion of optical fibre according to claim 13 or 14.

17. Method for the production of a primary preform of optical fibre comprising a central core suitable for transmitting and amplifying an optical signal and an optical cladding surrounding the central core and suitable for confining the transmitted optical signal within the core, the method comprising the steps of:
- synthesizing rare-earth-doped nanoparticles;
- dispersing the nanoparticles in an aqueous solution;
- impregnating an internal porous layer of a silica tube with said solution in order to form the core of a primary preform;
**characterised in that** said nanoparticles are silica-based nanoparticles, each nanoparticle containing at least 85% by weight (85 wt%) silica.

18. The method of claim 17, in which each synthesized nanoparticle contains at least 95% by weight (95 wt%) silica.

19. The method according to claim 17 or 18, in which the step of synthesizing nanoparticles comprises a step of co-precipitating precursors of rare earth salts and silica salts in an aqueous solution, with a molar ratio of silica salt precursors to rare earth salt precursors comprised between 30 and 300.

## Patentansprüche

1. Glasfaser, umfassend einen zentralen Kern, der zum Übertragen und Verstärken eines optischen Signals geeignet ist, und einen Lichtleitmantel, der den zentralen Kern umgibt und zum Begrenzen des übertragenen optischen Signals im Kern geeignet ist, wobei der Faserkern eine Matrix aufweist und mit seltenen Erden dotierte Nanoteilchen aufweist, **dadurch gekennzeichnet, dass** jedes Nanoteilchen eine Matrix auf Basis von Siliziumoxid aufweist, die mindestens 85 Gewichts-% (85 Gew.-%) Siliziumoxid enthält.

2. Glasfaser gemäß Anspruch 1, wobei die Matrix jedes Nanoteilchens mindestens 95 Gewichts-% (95 Gew.-%) Siliziumoxid enthält.

3. Glasfaser gemäß Anspruch 1 oder 2, wobei die Kernmatrix eine Matrix auf Basis von Siliziumoxid ist, die keinen Phosphor (P) enthält.

4. Glasfaser gemäß Anspruch 1 oder 2, wobei die Kernmatrix eine Matrix auf Basis von Siliziumoxid ist, die kein Aluminiumoxid (Al₂O₃) enthält.

5. Glasfaser gemäß einem der Ansprüche 1 bis 4, wobei die Kernmatrix eine reine Siliziumoxid-Matrix ist.

6. Glasfaser gemäß einem der Ansprüche 1 bis 4, wobei die Kernmatrix eine mit Fluor (F) dotierte Matrix auf Basis von Siliziumoxid ist.

7. Glasfaser gemäß einem der Ansprüche 1 bis 4, wobei die Kernmatrix eine mit Stickstoff (N) dotierte Matrix auf Basis von Siliziumoxid ist.

8. Glasfaser gemäß einem der Ansprüche 1 bis 4, wobei die Kernmatrix eine mit Germanium (Ge) dotierte Matrix auf Basis von Siliziumoxid ist.

9. Glasfaser gemäß einem der Ansprüche 1 bis 8, wobei die Matrix jedes Nanoteilchens eine reine Siliziumoxid-Matrix ist.

10. Glasfaser gemäß einem der Ansprüche 1 bis 8, wobei die Matrix jedes Nanoteilchens derart Aluminiumoxid enthält, dass die Konzentration von Aluminiumoxid im Kern weniger als 3 Gewichts-% beträgt.

11. Glasfaser gemäß einem der vorangehenden Ansprüche mit einer Verstärkungsbandbreite, die zwischen 1 nm und 40 nm, vorzugsweise zwischen 1 nm und 30 nm liegt.

12. Glasfaser gemäß einem der vorangehenden Ansprüche, wobei das Dotiermittel aus seltenen Erden ausgewählt ist aus Erbium (Er), Ytterbium (Yb), Thulium (Tm) oder einer Kombination davon.

13. Glasfaser gemäß Anspruch 12, dotiert mit Erbium, wobei die Glasfaser optische Verluste von weniger als oder gleich 1,5 dB/km bei 1200 nm aufweist, außerhalb des Absorptionsbandes von Erbium und vor jeglicher Bestrahlung.

14. Glasfaser gemäß Anspruch 13 mit einem Verlustzuwachs von weniger als 0,05 dB/m bei 1550 nm unter einer Bestrahlung mit 300 Gy bei 0,08 Gy/min (8 Rad/min) bei Umgebungstemperatur.

15. Glasfaserverstärker, umfassend einen Teil einer Faser gemäß Anspruch 13 oder 14, wobei die zur Verstärkung mit einer Zunahme von 25 dB bei 1550 nm erforderliche Faserlänge weniger als 10 m beträgt.

16. Laser, umfassend mindestens einen Teil der Glasfaser gemäß Anspruch 13 oder 14.

17. Verfahren zur Herstellung einer primären Vorform einer Glasfaser, umfassend einen zentralen Kern, der zum Übertragen und Verstärken eines optischen Signals geeignet ist, und einen Lichtleitmantel, der den zentralen Kern umgibt und zum Begrenzen des übertragenen optischen Signals im Kern geeignet ist, wobei das Verfahren die folgenden Schritte umfasst:
- Aufbauen von mit seltenen Erden dotierten Nanoteilchen;
- Dispergieren der Nanoteilchen in einer wässrigen Lösung;
- Imprägnieren der porösen Innenschicht eines Siliziumoxid-Rohrs mit der Lösung zur Bildung des Kerns aus einer primären Vorform;
**dadurch gekennzeichnet, dass** die Nanoteilchen Nanoteilchen auf Basis von Siliziumoxid sind, wobei jedes Nanoteilchen mindestens 85 Gewichts-% (85 Gew.-%) Siliziumoxid enthält.

18. Verfahren gemäß Anspruch 17, wobei jedes synthetisierte Nanoteilchen mindestens 95 Gewichts-% (95 Gew.-%) Siliziumoxid enthält.

19. Verfahren nach Anspruch 17 oder 18, wobei der Schritt des Synthetisierens von Nanoteilchen einen Schritt der gemeinsamen Ausfällung von Vorläufern von Seltenerdensalzen und Siliziumoxidsalzen in einer wässrigen Lösung mit einem Molverhältnis von Siliziumoxidsalzvorläufern zu Seltenerdensalzvorläufern zwischen 30 und 300 umfasst.

## Revendications

1. Fibre optique comprenant un coeur central adapté à transmettre et amplifier un signal optique, et une gaine optique entourant le coeur central et adaptée à confiner le signal optique transmis dans le coeur, le coeur de la fibre présentant une matrice et contenant des nanoparticules dopées de terre rare, **caractérisée en ce que** chaque nanoparticule présente une matrice à base de silice contenant au moins 85 % en poids (85 wt%) de silice.

2. Fibre optique selon la revendication 1, dans laquelle la matrice de chaque nanoparticule contient au moins 95 % en poids (95 wt%) de silice.

3. Fibre optique selon la revendication 1 ou 2, dans laquelle la matrice du coeur est une matrice à base de silice ne contenant pas de phosphore (P).

4. Fibre optique selon la revendication 1 ou 2, dans laquelle la matrice du cour est une matrice à base de silice ne contenant pas d'alumine (Al₂O₃).

5. Fibre optique selon l'une quelconque des revendications 1 à 4, dans laquelle la matrice du coeur est une matrice de silice pure.

6. Fibre optique selon l'une quelconque des revendications 1 à 4, dans laquelle la matrice du coeur est une matrice à base de silice dopée fluor (F).

7. Fibre optique selon l'une quelconque des revendications de 1 à 4, dans laquelle la matrice du coeur est une matrice à base de silice dopée azote (N).

8. Fibre optique selon l'une quelconque des revendications de 1 à 4, dans laquelle la matrice du coeur est une matrice à base de silice dopée germanium (Ge).

9. Fibre optique selon l'une quelconque des revendications 1 à 8, dans laquelle la matrice de chaque nanoparticule est une matrice de silice pure.

10. Fibre optique selon l'une quelconque des revendications 1 à 8, dans laquelle la matrice de chaque nanoparticule contient de l'alumine dans une concentration telle que la concentration d'alumine dans le coeur est inférieure à 3 % en poids.

11. Fibre optique selon l'une quelconque des revendications précédentes, présentant une largeur de gain comprise entre 1 nm et 40 nm, de préférence entre 1 nm et 30 nm.

12. Fibre optique selon l'une des revendications précédentes, dans laquelle les dopants de terre rare sont choisis parmi de l'Erbium (Er), de l'Ytterbium (Yb), du Thulium (Tm) ou une combinaison de ceux-ci.

13. Fibre optique selon la revendication 12 dopée Erbium, présentant des pertes optiques inférieures ou égales à 1,5 dB/km à 1200 nm, en dehors de la bande d'absorption de l'Erbium et avant toute irradiation.

14. Fibre optique selon la revendication 13, présentant un incrément de pertes inférieur à 0,05 dB/m à 1550 nm sous une irradiation de 300 Gy à 0,08 Gy/mn (8 Rad/mn) à température ambiante.

15. Amplificateur optique comprenant une portion de fibre selon la revendication 13 ou 14, dans lequel la longueur de fibre nécessaire à une amplification avec un gain de 25 dB à 1550 nm est inférieure à 10 m.

16. Laser comprenant au moins une portion de fibre optique selon la revendication 13 ou 14.

17. Procédé de fabrication d'une préforme primaire de fibre optique comprenant un coeur central adapté à transmettre et amplifier un signal optique, et une gaine optique entourant le coeur central et adaptée à confiner le signal optique transmis dans le coeur, le procédé comprenant les étapes consistant à :
- synthétiser des nanoparticules dopées de terre rare ;
- disperser les nanoparticules dans une solution aqueuse ;
- imprégner une couche poreuse interne d'un tube de silice avec ladite solution pour former le coeur d'une préforme primaire ;
**caractérisé en ce que** lesdites nanoparticules sont des nanoparticules à base de silice, chaque nanoparticule contenant au moins 85 % en poids (85 wt%) de silice.

18. Procédé selon la revendication 17, dans lequel chaque nanoparticule synthétisée contient au moins 95 % en poids (95 wt%) de silice.

19. Procédé selon la revendication 17 ou 18, dans lequel l'étape de synthèse des nanoparticules comprend une étape consistant à co-précipiter des précurseurs de sels de terre rare et de sels de silice dans une solution aqueuse, avec un rapport molaire de précurseurs de sels de silice et de précurseurs de sels de terre rare compris entre 30 et 300.
